# EUROPÄISCHE PATENTSCHRIFT

(11) **EP 1 590 579 B1**
(45) Veröffentlichungstag und Bekanntmachung des Hinweises auf die Patenterteilung: **31.12.2008**
(21) Anmeldenummer: 03702606.9
(22) Anmeldetag: 06.02.2003
(51) Int. Cl.: F16F 1/373, E04H 9/02, E01D 19/04

(54) **LAGERKONSTRUKTION ZUR GEDÄMPFTEN ÜBERTRAGUNG VON STOSS- UND/ODER SCHWINGUNGSKRÄFTEN**
BEARING STRUCTURE FOR THE DAMPED TRANSMISSION OF IMPACT AND/OR VIBRATORY FORCES
STRUCTURE DE PALIER POUR TRANSMISSION AMORTIE DE FORCES DE CHOC ET/OU DE VIBRATION

(43) Veröffentlichungstag der Anmeldung: 02.11.2005
(73) Patentinhaber: Hertzfeldt, Roger, 6030 Ebikon (CH); BDM Beratungsgesellschaft des Mittelstandes mbH, 6030 Ebikon (CH)
(72) Erfinder: STEFFENS, Frank, 40549 Düsseldorf (DE); HERTZFELDT Roger, 85630 Grasbrunn (DE)
(74) Vertreter: Kruspig, Volkmar
(86) Internationale Anmeldenummer: PCT/EP2003/001190
(87) Internationale Veröffentlichungsnummer: WO 2004/070228

(56) Entgegenhaltungen:
- US-A- 4 286 827
- US-A- 5 498 060
- US-A- 5 988 610
- PATENT ABSTRACTS OF JAPAN vol. 1999, no. 13, 30. November 1999 (1999-11-30) & JP 11 229666 A (TOYO TIRE &RUBBER CO LTD), 24. August 1999 (1999-08-24)

## Beschreibung

Die Erfindung betrifft eine Lagerkonstruktion zur gedämpften Übertragung von Stoß- und/oder Schwingungskräften, insbesondere für Bauwerke, welche einer seismischen Belastung ausgesetzt sind, umfassend ein zwischen zwei Teilen eines Lagerkörpers angeordnetes volumenelastisches Dämpfungsmaterial gemäß Oberbegriff des Patentanspruchs 1.

Gummifedern, die auf Parallel- oder Verdrehschub, aber auch auf Druck ansprechen und zur Stoß- und Schwingungsdämpfung geeignet sind, gehören zum bekannten Stand der Technik. Derartige Federelemente dienen der Dämpfung und Absorption z.B. von hochfrequenten Körperschallschwingungen in den verschiedensten Bereichen der Mechanik. Handelsübliche Gummifedern umfassen Gummiformteile mit anvulkanisierten metallischen Anschlußstücken zur Befestigung und Krafteinleitung. Gummi als volumenelastisches und inkompressibles Material besitzt ein nichtlineares Spannungs-Dehnungs-Verhalten, wobei die Proportionalität zwischen Belastung und Formgebung nach dem Hook'schen Gesetz begrenzt ist.

Metall/Gummi-Lager, z.B. zur Aufnahme von thermisch bedingten Ausdehnungskräften bei Brücken oder sonstigen Bauwerken finden vielfach Anwendung. Derartige Konstruktionen sind jedoch nicht geeignet, seismisch bedingte Belastungen aufzunehmen.

Eine mögliche Strategie, die Beanspruchung von Bauwerken unter seismischer Belastung zu senken, ist die sogenannte Erdbeben-Isolation. Hierunter versteht man die Entkopplung der Grundschwingzeiten des Bauwerks von der Erregerfrequenz des Bebens. Dies erfolgt durch das Ausbilden einer horizontal weichen Lagerungsebene, durch die die Grundschwingzeit des Bauwerks erhöht wird. Aufgrund der Charakteristika der Erdbebenanregung wird eine deutliche Verringerung der Beanspruchung der betroffenen Bauwerke erreicht, wenn die Grundschwingzeit des betreffenden Systems in einem Bereich von ca. 3 bis 5 Sekunden liegt.

Durch den Einsatz genormter Lager ist die Steuerung der Steifigkeit der Lagerungsebene allerdings nur begrenzt möglich. Eine Anhebung der Grundschwingzeit z.B. von Brückensystemen in dem Bereich von 3 bis 5 Sekunden mittels des Einsatzes genormter Elastomerlager kann selten erreicht werden. Bekannte Brückenlagerungen werden durch horizontal weiche Elastomerlager in Verbindung mit starren Festhaltungen umgesetzt. Diese starren Festhaltungen können die im Erdbebenfall auftretenden Kräfte nur in den seltensten Fällen aufnehmen und verschlechtern zudem das dynamische Verhalten des Bauwerks.

Nachteile bekannter Maßnahmen der Erdbeben-Isolation sind die auftretenden Relativbewegungen zwischen den Bauteilen, welche sich mit längerer Eigenschwingzeit des Systems vergrößern. Gerade im Brückenbau ist das Maß der vertretbaren Bewegungen insbesondere in Querrichtung sehr begrenzt.

Zum Stand der Technik sei noch auf das deutsche Patent 498 043 verwiesen, welches eine Ringfeder zeigt, wobei es dort nicht darum geht, horizontal wirkende Kräfte aufzunehmen, wobei in vertikaler Richtung keine Kräfte übertragen werden. In eine ähnliche Richtung geht die FR 2 652 865 A1. Auch dort ist nicht für eine freie Bewegung in z-Richtung gesorgt. Im übrigen ist der bei diesem Stand der Technik ins Auge gefaßte Anwendungsfall auf eine Dämpfungseinrichtung für Radaufhängungen an Schienenfahrzeugen gerichtet.

Auch die US-PS 2,126,707 zeigt eine Art Ringfeder mit gummielastischen Dämpfungszwischenräumen. Die offenbarte elliptische Form des Dämpfungskörpers geht nicht auf die Problematik der freien Beweglichkeit in z-Richtung und die unterschiedlichen Dämpfungswerte in Haupt- und Nebenachsenrichtung ein.

Aus der gattungsbildenden JP 11 229666 A ist eine Schwingungsdämpfungseinrichtung insbesondere für Reihenhäuser vorbekannt. Die dortige Lagerkonstruktion zur Dämpfung von Stoß- und/oder Schwingungskräften, auch im Falle seismischer Belastungen, umfaßt ein zwischen zwei Teilen eines Lagerkörpers angeordnetes, volumenelastisches Dämpfungsmaterial, wobei eines der Lagerteile eine topfähnliche Form besitzt.

Aus dem Vorgenannten ist es daher Aufgabe der Erfindung, eine weiterentwickelte Lagerkonstruktion als ein Element in einem Lagerungssystem zur gedämpften Übertragung von Stoß- und/oder Schwingungskräften, insbesondere für Bauwerke, welche einer seismischen Belastung ausgesetzt sind, anzugeben, wobei die Konstruktion so zu wählen ist, daß eine einfache und optimale Abstimmung mit Bezug auf das Schwingverhalten des Bauwerks, das maximale Maß der möglichen Bewegung, die zu übertragenden Kräfte und bezogen auf die angestrebte große Dämpfung des Elements erfolgen kann.

Die Lösung der Aufgabe der Erfindung erfolgt mit einer Lagerkonstruktion gemäß den Merkmalen des Patentanspruchs 1, wobei die Unteransprüche mindestens zweckmäßige Ausgestaltungen und Weiterbildungen umfassen.

Erfindungsgemäß ist ein erstes Lagerteil im wesentlichen topfförmig ausgebildet, wobei im Zentrum des Topfes eine Führungshülse und zwischen Führungshülse und der Topfinnenwandung ein oder mehrere Bewehrungshülsen angeordnet sind. Ein volumenelastisches Dämpfungsmaterial füllt die Räume zwischen Topfinnenwandung, Bewehrungs- und Führungshülse mindestens teilweise aus.

Ein zweites Lagerteil umfaßt einen in der Führungshülse verschieblichen Bolzen, wobei der Bolzen mit einer ersten Befestigungsplatte in Verbindung steht. Topfaußenseitig ist eine zweite Befestigungsplatte oder Befestigungsfläche vorgesehen, so daß das erste und das zweite Lagerteil z.B. zwischen einem Fundament und dem zu stützenden Bauwerk verankert werden können.

Erfindungsgemäß sind die Bewehrungshülsen konzentrisch um die Führungshülse angeordnet und im Dämpfungsmaterial mindestens teilweise eingebettet.

Die Bewehrungshülsen sind dabei der Querschnittsform des Topfes angepaßt. Bei einem kreisringförmigen Topf sind demnach die Bewehrungshülsen ebenfalls kreisringförmig mit entsprechend abgestuften Durchmesserverhältnissen.

Der Topf selbst kann die erwähnte Kreis- oder Kreisringform, aber auch einen elliptischen, rechteckigen oder einen Vieleck-Querschnitt bzw. eine solche Querschnittsfläche aufweisen.

Die Topfdeck- und -bodenfläche sind offen oder besitzen eine Abdeckung derart, daß die Bewegung des Bolzens einerseits, aber auch des Dämpfungsmaterials andererseits nicht behindert wird. Mit anderen Worten muß sich das Dämpfungsmaterial bei Verformung frei im wesentlichen senkrecht zur Krafteinwirkungsrichtung ausdehnen können.

Das Dämpfungsmaterial ist mit der Topfinnenwandung, der Außenwandung der Führungshülse und/oder den Bewehrungshülsen durch Anvulkanisieren verbunden.

Die erste bzw. zweite Befestigungsplatte oder Befestigungsfläche ist einerseits jeweils am Widerlager, Pfeiler oder Fundament des zu stützenden Bauteils und andererseits am zu stützenden Bauteil selbst verankert.

Die Verankerung erfolgt derart, daß horizontal bzw. in x- und y-Richtung wirkende Kräfte aufgenommen werden können, vertikal jedoch keine Kräfte übertragen werden, was dadurch realisiert ist, daß der Bolzen der Führungshülse spielfrei verschieblich gelagert ist. Auch ist eine Befestigung derart möglich, daß die Befestigungsplatte, das erste und/oder zweite Lagerteil bzw. der Bolzen in das zu stützende Bauteil eingelassen, z.B. einbetoniert werden.

Bei einer z.B. elliptischen Querschnittsfläche des Topfes und damit auch der Bewehrungshülsen und des Dämpfungsmaterials können zwischen Hauptachsenrichtung und Nebenachsenrichtung der Ellipse verschiedene Dämpfungswerte vorgegeben werden.

Um maximale Kräfte ohne Zerstörung der anvulkanisierten Bereiche aufnehmen zu können, ist in den randseitigen Übergangsbereichen zwischen Dämpfungsmaterial und Topfinnenwandung und/oder Außenwandung der Führungshülse das Dämpfungsmaterial bezogen auf den durchschnittlichen Dickenverlauf im unbelasteten Zustand überhöht ausgeführt. Hiernach ist also dieser Übergangsbereich stetig ansteigend oder kreisbogen- bzw. wulstartig verlaufend ausgestaltet.

Zur weiteren Verbesserung der Haftung des Dämpfungsmaterials sind die Bewehrungshülsen an ihren Schmalseiten mit einer Fase versehen oder besitzen einen bogenförmigen Verlauf bzw. eine derartig gestaltete Rundung.

Bei einer rechteckigen Querschnittsfläche des Topfes sind analog einer elliptischen Gestaltung verschiedene Dämpfungs- oder Steifigkeitsverhältnisse in Richtung der jeweiligen Kanten des Rechtecks einstellbar.

Das Dämpfungsmaterial ist ein natürliches oder synthetisches Hochpolymer, wobei Topf, Bewehrungs- und Führungshülse aus Metall, insbesondere Stahl bestehen.

Bevorzugt weisen die anzuvulkanisierenden metallischen Oberflächenbereiche eine aufgerauhte Struktur auf.

Die Trag- und Verformungsfähigkeit der Lagerkonstruktion hängt im wesentlichen vom Durchmesser und der Form des äußeren Rings, d.h. des Topfes, dem Durchmesser und der Form des Führungsbolzens und der zugehörigen Hülse sowie der Anzahl, der Verteilung, der Höhe und der Dicke der Elastomer- bzw. Dämpfungsmaterial-Schichten ab. Durch das Elastomermaterial selbst kann das Verformungsverhalten der Gesamtanordnung eingestellt werden, wobei die jeweiligen Elastomerschichten auch durch ein unterschiedliches Material mit verschiedenen Eigenschaften gebildet werden können. Eine weitere Variable zur Gestaltung der Eigenschaften der Lagerkonstruktion besteht in der möglichen Auswahl zwischen vulkanisierter und unvulkanisierter Ausführungsform bezogen auf die Verbindung zwischen Dämpfungsmaterial und den metallischen Teilen der Anordnung.

Die Festigkeit, Dicke und Aussteifungen der metallischen Teile werden nach deren möglicher maximaler Belastung gewählt. Die Beanspruchung des Elastomermaterials kann durch konstruktive Detaillösungen verringert werden, und zwar durch eine variable obere und/oder untere Überdeckung der Bewehrungshülsen mit Elastomer, durch die erwähnte spezielle Kantenform der Bewehrungshülsen selbst, aber auch durch eine Ausgestaltung der Verbindungsstelle Elastmer - Topfinnenwandung bzw. Elastomer - Außenfläche der Führungshülse mit entsprechend beanspruchungsverringender Form.

Eine erfindungsgemäße Verwendung der Lagerkonstruktion besteht im Zweck der elastischen Übertragung von horizontalen Kräften, d.h. Kräften in x- und y-Richtung bei der Lagerung von Bauwerken.

Als spezielles Einsatzgebiet ist der Erdbebenschutz von Bauwerken, z.B. Brücken zu nennen. Hier ist von Vorteil, daß das Element bevorzugt nur Kräfte in der x/y-Ebene, d.h. senkrecht zu den Bewehrungshülsen überträgt. Verschiebungen der angrenzenden Bauteile senkrecht zur Elementebene, d.h. in z-Richtung, nämlich parallel zu den Bewehrungshülsen, werden nahezu kräftefrei ermöglicht.

Durch die gegebene Elastizität des Dämpfungsmaterials respektive der Elastomerschichten wird im Gegensatz zu bekannten horizontalen Festhaltungen ermöglicht, daß horizontale Bewegungen stattfinden können. Hierbei erfolgt ein stetiger Anstieg der Rückstellkräfte. Die Steifigkeit der Lagerkonstruktion steigt mit dem Maß der Verformung an, d.h. es ist eine progressive Steifigkeit gegeben. Beim Einsatz der erfindungsgemäßen Lagerkonstruktion stellt sich in gewünschter Weise eine Dämpfung bei dynamischer Belastung ein. Die erwähnten Parameter gestatten eine breite Dimensionierung der Lagerkonstruktion, wobei durch Variation der Materialeigenschaften des Elastomers das gesamte Dämpfungsverhalten gezielt beeinflußt werden kann.

Bei Einsatz der Lagerkonstruktion ist also in einer Vorzugsrichtung eine nahezu kraftfreie Lagerung bei kleinen Bauwerksbewegungen im Sinne einer schwimmenden Lagerung des Bauwerks möglich, wodurch sich Zwangsbeanspruchungen verringern. Bei größeren Bauwerksbewegungen steigen die Rückführungskräfte progressiv an und es findet eine Energiedissipation durch das Dämpfungsverhalten des Elastomers selbst statt, wodurch eine Verringerung der Beanspruchung des Bauwerks bei dynamischer Belastung, z.B. einem Erdbeben die Folge ist.

Durch eine einfache Dimensionierung der Lagerkonstruktion in bezug auf das gewünschte Kraft-Verformungs-Verhalten ist die Möglichkeit geschaffen, die Lagerung eines Bauwerks auf die Anforderungen oder Einwirkungen gezielt abzustimmen. Diese Abstimmung ist mit Blick auf das Schwingverhalten des Bauwerks, das maximale Maß der möglichen Bewegung, die zu übertragenden Kräfte und die Dämpfung der Lagerkonstruktion erreichbar. Im Gegensatz zu üblichen Lagern kann durch die Wahl verschiedener Querschnittsflächenformen ein unterschiedliches Dämpfungsverhalten in Längs- und Querrichtung bzw. x- und y-Richtung eingestellt werden. Hierdurch ist das Maß einer möglichen Maximalverschiebung in einer bestimmten Richtung steuerbar.

Zur Herstellung der erfindungsgemäßen Lagerkonstruktion wird ein neuer Weg beschritten. Diese Technologie ist dadurch gekennzeichnet, daß zunächst um die Führungshülse ein gummielastisches Material gewickelt wird. Nachdem das so gegebene Gebilde vorliegt, wird eine erste Bewehrungshülse übergestülpt. Im Anschluß hieran erfolgt eine weitere Wicklung eines Gummicompounds und so weiter. Dieses vorgefertigte Teil wird dann in eine Form gegeben, die gleichzeitig die Außenwandung, respektive das Lagerteil darstellt. Formenboden und Formendeckel besitzen eine nach innen gerichtete Wölbung zur Unterstützung der Bildung von gewünschten Übergangsbereichen des Gummicompounds zu den metallischen Teilen. Mittels Temperatur- bzw. Druck- und Temperaturbehandlung findet dann der eigentliche Vulkanisationsprozeß, d.h. die Verbindung zwischen den Wickelschichten untereinander und den Bewehrungshülsen bzw. dem Lagerteil und der zum Gummimaterial hin gerichteten Seite der Führungshülse statt. Durch die Wahl der Wicklungen und der sich hieraus ergebenden Wicklungsstärke lassen sich in einfacher Weise Lagerkonstruktionen unterschiedlicher Abmessungen, insbesondere unterschiedlicher Durchmesser, mit geringen Kosten realisieren. Störende Lufteinschlüsse werden im Vergleich zum Stand der Technik, der von geschnittenen Kreisringen ausgeht, die über die Hülsen gestülpt werden, vermieden.

Die Erfindung soll nachstehend anhand eines Ausführungsbeispiels sowie unter Zuhilfenahme von Figuren näher erläutert werden.

Hierbei zeigen:
- Fig. 1: eine Schnittdarstellung der Lagerkonstruktion nach Ausführungs- beispiel;
- Fig. 2: eine weitere Schnittdarstellung längs der Linie A-A gemäß Fig. 1; und
- Fig. 3: eine Prinzipdarstellung in teilperspektivischer Ansicht der Lager- konstruktion bei Belastung in x-Richtung.

Die Lagerkonstruktion gemäß der nachstehenden Beschreibung wird z.B. zwischen einem Fundament 1 und einem zu stützenden Bauteil 1', z.B. einer Brücke, über Befestigungsflächen 2 und 3 in geeigneter Weise verankert.

Dabei besteht grundsätzlich die Möglichkeit, daß das erste, topfförmige Lagerteil 6 am Fundament 1, aber auch am zu stützenden Bauteil 1' fixiert wird.

Das erste, topfförmige Lagerteil 6 besitzt im Zentrum eine Führungshülse 7, wobei zwischen Führungshülse 7 und der Innenwandung des ersten Lagerteils 6 ein oder mehrere Bewehrungshülsen 5 angeordnet sind. Ein Dämpfungsmaterial 4 füllt die Räume zwischen Topfinnenwandung sowie Bewehrungshülsen 5 und Führungshülse 7 mindestens teilweise aus.

Das zweite Lagerteil besitzt einen in der Führungshülse 7 verschieblichen Bolzen 8, wobei der Bolzen 8 mit einer entsprechenden Befestigungsplatte 2; 3 verbunden ist.

Beim gezeigten Beispiel sind die Bewehrungshülsen 5 konzentrisch um die Führungshülse 7 angeordnet und im Dämpfungsmaterial 4 eingebettet. Die Bewehrungshülsen 5 sind der Querschnittsform des topfförmigen ersten Lagerteils 6 angepaßt. So besitzen die Bewehrungshülsen 5 analog der Topfform eine z.B. kreisringförmige Gestalt.

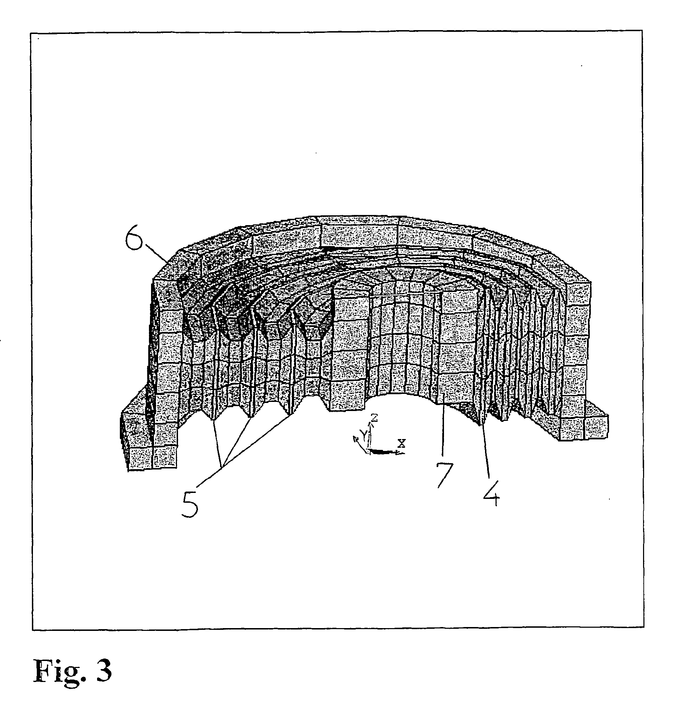

In den Figuren nicht gezeigt besteht auch die Möglichkeit, daß der Topf eine elliptische, rechteckige oder eine Vieleck-Querschnittsfläche aufweist. Die oberen und unteren Flächen des Topfes sind so gestaltet, daß sich das Dämpfungsmaterial 4, wie in Fig. 3 im rechten Bildteil gezeigt, bei entsprechender Belastung in x-Richtung nach oben und unten frei ausdehnen kann.

Das Dämpfungsmaterial 4 ist mit den jeweiligen bevorzugt metallischen Oberflächen des Topfes, den Bewehrungshülsen 5 und/oder der Führungshülse 7 durch Anvulkanisieren verbunden.

Die Verankerung der Lagerkonstruktion erfolgt derart, daß mit Blick auf die Fig. 3 horizontal wirkende Kräfte, d.h. Kräfte in x- und y-Richtung aufgenommen werden können, wobei in vertikaler, d.h. in z-Richtung keine Kräfte übertragen werden.

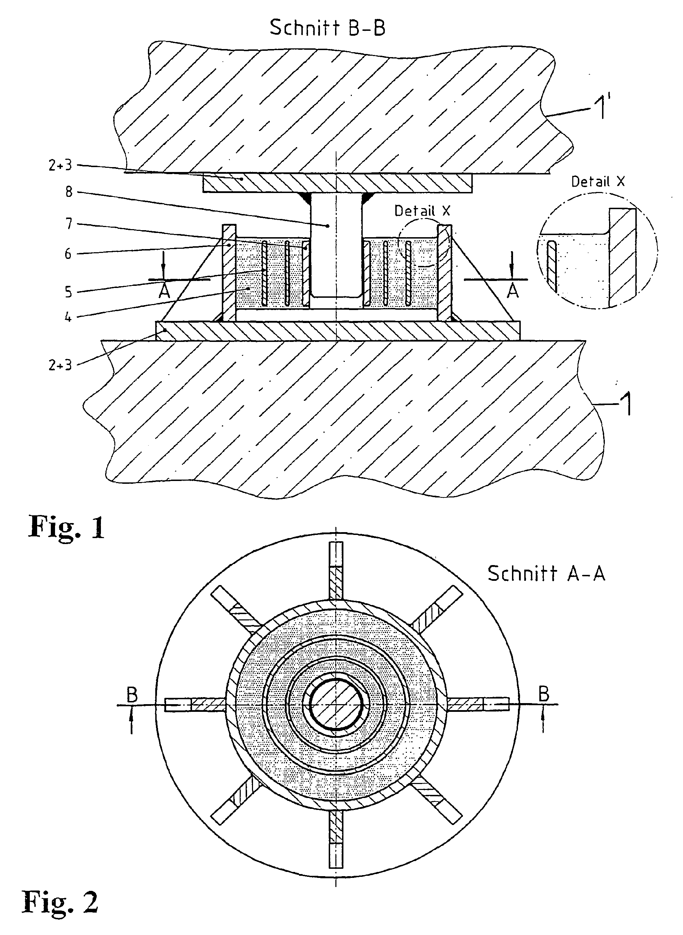

Die Detaildarstellung in Fig. 1 zeigt einen kreisbogenförmigen Übergangsbereich zwischen dem Dämpfungsmaterial 4 und der Innenwandung des topfförmigen ersten Lagerteils 6 zur Verbesserung der Haftung und zur sicheren Ableitung auftretender Kräfte, ohne daß sich das anvulkanisierte Dämpfungsmaterial von der metallischen Oberfläche löst.

Über die Wahl unterschiedlicher, von einer Kreisform abweichender Querschnittsflächen des Topfes und der Bewehrungshülsen 5 ist es möglich, verschiedene Dämpfungs- oder Steifigkeitsverhältnisse in x- oder y-Richtung vorzugeben.

Gemäß Ausführungsbeispiel besteht das Dämpfungsmaterial aus natürlichen oder synthetischen Hochpolymeren, wobei Topf, Bewehrungs- und Führungshülse aus Stahl gefertigt sind. Zur Verbesserung der Haftung des Dämpfungsmaterials können die entsprechenden Oberflächen der metallischen Teile eine aufgerauhte Struktur besitzen.

Die Lagerkonstruktion gemäß Ausführungsbeispiel ermöglicht eine stetige Kraftübertragung bei einem progressivem Kraft-, Verformungs- und Steifigkeitsverlauf. Die erforderliche Steifigkeit und Tragfähigkeit ist durch einfache Variation der Dimensionierungsverhältnisse einstellbar.

Im Vergleich zu starren Festhaltungen können auftretende Kräfte infolge Bauwerksbewegungen bei Nutzung der Lagerkonstruktion vermindert werden.

Ein spezielles Anwendungsgebiet der Lagerkonstruktion ist der Einsatz zum Erdbebenschutz von Brücken bzw. die Verwendung als zwängungsarme schwimmende Lagerung von Brückenbauwerken.

## Patentansprüche

1. Lagerkonstruktion zur gedämpften Übertragung von Stoß- und/oder Schwingungskräften, insbesondere für Bauwerke, welche einer seismischen Belastung ausgesetzt sind, umfassend ein zwischen zwei Teilen eines Lagerkörpers angeordnetes, volumenelastisches Dämpfungsmaterial (4), wobei das erste Lagerteil (6) eine im wesentlichen Topfform aufweist,
**dadurch gekennzeichnet, daß**
im Zentrum oder Schwerpunkt des Topfes eine Führungshülse und zwischen Führungshülse (7) und der Topfinnenwandung ein oder mehrere Bewehrungshülsen (5) angeordnet sind sowie das Dämpfungsmaterial (4) die Räume zwischen Topfinnenwandung, Bewehrungs- und Führungshülse (5; 7) mindestens teilweise ausfüllt, das zweite Lagerteil einen in der Führungshülse (7) verschieblichen Bolzen (8) umfaßt, wobei der Bolzen (8) mit einer ersten Befestigungsplatte (2) in Verbindung steht, weiterhin topfaußenseitig eine zweite Befestigungsplatte (3) vorgesehen ist, um somit das erste (6) und zweite Lagerteil zu verankern, die erste und zweite Befestigungsplatte (2; 3) oder Befestigungsfläche geeignet sind, einerseits jeweils am Widerlager, Pfeiler oder Fundament des zu stützenden Bauteils (1') und andererseits am zu stützenden Bauteil (1') selbst verankert oder eingelassen zu werden, und die Verankerung derart erfolgt, daß horizontal, d.h. in x- und y-Richtung wirkende Kräfte aufgenommen, vertikal, d.h. in z-Richtung jedoch keine Kräfte übertragen werden, die Bewehrungshülsen (5) konzentrisch um die Führungshülse (7) angeordnet und im Dämpfungsmaterial (4) eingebettet sind und an ihren Schmalseiten jeweils eine Fase oder bogenförmig Rundung aufweisen sowie in den randseitigen Übergangsbereichen zwischen Dämpfungsmaterial und Topfinnenwandung und/oder Außenwandung der Führungshülse (7) das Dämpfungsmaterial (4) bezogen auf den durchschnittlichen Dickenverlauf im unbelasteten Zustand zur besseren Haftung und Kraftaufnahme überhöht ausgeführt und anvulkanisiert ist.

2. Lagerkonstruktion nach Anspruch 1,
**dadurch gekennzeichnet, daß**
die Bewehrungshülsen (5) der Querschnittsform des Topfes angepaßt sind.

3. Lagerkonstruktion, nach Anspruch 2,
**dadurch gekenzeichnet,** daß
der Topf eine kreisförmige, elliptische, rechteckige oder Vieleck-Querschnittsfläche aufweist.

4. Lagerkonstruktion nach einem der vorangegangenen Ansprüche,
**dadurch gekennzeichnet, daß**
die Topfdeck- und -bodenfläche offen sind oder eine solche Abdeckung oder Grundfläche aufweisen, daß sich das Dämpfungsmaterial (4) bei Verformung frei im wesentlichen senkrecht zur Krafteinwirkungsrichtung ausdehnen kann.

5. Lagerkonstruktion nach einem der vorangegangenen Ansprüche,
**dadurch gekennzeichnet, daß**
das Dämpfungsmaterial (4) mit der Topfinnenwandung, der Außenwandung der Führungshülse (7) und/oder den Bewehrungshülsen (5) durch Anvulkanisieren verbunden ist.

6. Lagerkonstruktion nach einem der vorangegangenen Ansprüche,
**dadurch gekennzeichnet, daß**
bei einer elliptischen Querschnittsfläche des Topfes und der Bewehrungshülsen (5) zwischen Hauptachse und Nebenachse der Ellipse verschiedene Dämpfungs- und Steifigkeitswerte vorgebbar sind.

7. Lagerkonstruktion nach Anspruch 1,
**gekennzeichnet durch**
die Ausbildung eines stetigen Übergangs des Dämpfungsmaterials (4) mit bevorzugt kreisbogenförmigem oder wulstartigem Verlauf.

8. Lagerkonstruktion nach einem der vorangegangenen Ansprüche,
**dadurch gekennzeichnet, daß**
bei einer rechtecktigen Querschnittsfläche a • b des Topfes verschiedene Dämpfungs- oder Steifigkeitsverhältnisse in Richtung der jeweiligen Kanten a und b vorgebbar sind.

9. Lagerkonstruktion nach einem der vorangegangenen Ansprüche,
**gekennzeichnet durch**
natürliche oder synthetische Hochpolymere als Dämpfungsmaterial (4), wobei Topf, Bewehrungs- (5) und Führungshülse (7) sowie Führungsbolzen (8) aus Metall, insbesondere Stahl bestehen.

10. Lagerkonstruktion nach Anspruch 9,
**dadurch gekennzeichnet, daß**
die anzuvulkanisierenden metallischen Oberflächen eine aufgerauhte Struktur aufweisen.

11. Lagerkonstruktion nach einem der vorangegangenen Ansprüche,
**dadurch gekennzeichnet, daß**
der Bolzen (8) in der Führungshülse (7) drehbeweglich gelagert ist.

## Claims

1. A bearing structure for the damped transmission of impact and/or vibratory forces, in particular for buildings which are subjected to a seismic load, comprising a volume-elastic damping material (4) which is arranged between two parts of a bearing body, with the first bearing part (6) having essentially the shape of a pot,
**characterized in that**
a guide sleeve is arranged in the center or center of gravity of the pot and one or several reinforcing sleeves (5) are arranged between the guide sleeve (7) and the pot inner wall and the damping material (4) fills the spaces between the pot inner wall, reinforcing and guide sleeve (5; 7) at least partially, that the second bearing part comprises a bolt (8) which can be displaced inside the guide sleeve (7), with the bolt (8) being connected with a first fastening plate (2), further a second fastening plate (3) being provided on the outside of the pot in order to anchor the first (6) and the second bearing part, the first and the second fastening plate (2; 3) or fastening area being suited of being anchored or embedded, on the one hand, at the abutment, pillar, or foundation of the component (1') to be supported and, on the other hand, on the component to be supported (1') itself, with the anchoring being effected in such a manner that forces acting horizontally, i.e. in the x- and y-direction, are accommodated, while no forces are transmitted vertically, i.e. in the z-direction, the reinforcing sleeves (5) being arranged concentrically about the guide sleeve (7) and embedded in the damping material (4) and comprising a chamfer or arc-shaped curvature at their narrow sides each, and wherein the damping material (4) in the marginal transition areas between damping material and the pot inner wall and/or the outer wall of the guide sleeve (7) is formed to be cambered relative to the average thickness distribution in the unloaded condition and vulcanised thereon in order to improve adhesion and force accommodation.

2. The bearing structure according to claim 1, **characterized in that** the reinforcing sleeves (5) are adapted to the cross-sectional shape of the pot.

3. The bearing structure according to claim 2, **characterized in that** the pot comprises a circular, elliptic, rectangular, or polygonal cross-sectional area.

4. The bearing structure according to one of the preceding claims, **characterized in that** the covering and bottom areas of the pot are open and comprise such a cover or bottom area that the damping material (4) upon deformation is able to expand freely, essentially perpendicularly to the direction of the action of the force.

5. The bearing structure according to one of the preceding claims, **characterized in that** the damping material (4) is joined with the pot inner wall, the outer wall of the guide sleeve (7) and/or the reinforcing sleeves(5) by vulcanisation thereon.

6. The bearing structure according to one of the preceding claims, **characterized in that** with an elliptic cross-sectional area of the pot and the reinforcing sleeves (5), different damping and stiffness values between the major and minor axis of the ellipse may be specified.

7. The bearing structure according to claim 1, **characterized by** the formation of a continuous transition of the damping material (4) with preferably circular arc-shaped or bead-type gradient.

8. The bearing structure according to one of the preceding claims, **characterized in that** with a rectangular cross-sectional area a • b of the pot, different damping or stiffness ratios in the direction of the respective edges a and b may be specified.

9. The bearing structure according to one of the preceding claims, **characterized by** natural or synthetic high polymers as damping material (4), with the pot, the reinforcing (5) and the guide sleeves (7) as well as the guide bolt (8) consisting of metal, in particular of steel.

10. The bearing structure according to claim 9, **characterized in that** the metallic surfaces to be connected by vulcanisation comprise a roughened structure.

11. The bearing structure according to one of the preceding claims, **characterized in that** the bolts (8) are rotatably mounted in the guide sleeve (7).

## Revendications

1. Structure de palier pour transmission amortie de forces dues à des chocs et/ou des oscillations, en particulier pour des bâtiments qui sont exposés à des contraintes sismiques, comprenant un matériau amortisseur (4) élastique en son volume, agencé entre eux deux parties d'un corps de palier, la première partie de palier (6) présentant essentiellement la forme d'un pot,
**caractérisée en ce que**
une douille de guidage est agencée au centre géométrique ou au centre de gravité du pot, et une ou plusieurs douilles d'armature (5) est/sont agencée entre la douille de guidage (7) et la paroi intérieure du pot, et le matériau amortisseur (4) remplit au moins partiellement les espaces entre la paroi intérieure du pot, la ou les douilles d'armature et la douille de guidage (5 ; 7) ; la seconde partie de palier comprend un goujon (8) mobile dans la douille de guidage (7), ledit goujon (8) étant en liaison avec une première plaque de fixation (2), et il est en outre prévu, du côté extérieur du pot, une seconde plaque de fixation (3) pour ancrer ainsi la première (6) et la seconde partie de palier, la première et la seconde plaque de fixation (2 ; 3) ou leurs surfaces de fixation étant appropriées pour être ancrées ou intégrées d'une part respectivement sur une contrebutée, un pilier ou une fondation du bâtiment à soutenir (1') et d'autre part sur le bâtiment à soutenir (1') lui-même, et l'ancrage a lieu de telle façon que les forces agissant horizontalement, c'est-à-dire en direction x et en direction y sont encaissées, mais qu'aucune force n'est transmise en direction z ; les douilles d'armatures (5) sont agencées concentriquement autour de la douille de guidage (7) et sont noyées dans le matériau amortisseur (4) et présentent sur leur petit côté respectivement un chanfrein ou un arrondi en forme d'arc ; et **en ce que** le matériau amortisseur (4) est réalisé avec une surépaisseur, par référence au tracé d'épaisseur moyen à l'état non chargé, et appliqué par vulcanisation dans les zones de transition à la bordure entre le matériau amortisseur et la paroi intérieure du pot et/ou la paroi extérieure de la douille de guidage (7), pour une meilleure adhérence et un meilleur encaissement des forces.

2. Structure de palier selon la revendication 1,
**caractérisée en ce que** les douilles d'armature (5) sont adaptées à la forme de section transversale du pot.

3. Structure de palier selon la revendication 2,
**caractérisée en ce que** le pot présente en section transversale une surface de forme circulaire, elliptique, rectangulaire ou polygonale.

4. Structure de palier selon l'une des revendications précédentes,
**caractérisée en ce que** les surfaces au sommet et au fond du pot sont ouvertes, ou présentent un recouvrement ou une surface de base tel(le) que le matériau amortisseur (4) peut se dilater librement, lors de sa déformation, sensiblement perpendiculairement à la direction d'action des forces.

5. Structure de palier selon l'une des revendications précédentes,
**caractérisée en ce que** le matériau amortisseur (4) est relié par vulcanisation à la paroi intérieure du pot, à la paroi extérieure de la douille de guidage (7) et/ou aux douilles d'armature (5).

6. Structure de palier selon l'une des revendications précédentes,
**caractérisée en ce que** lorsque le pot et les douilles d'armature (5) ont une section transversale elliptique, des valeurs d'amortissement et de raideur différentes peuvent être attribuées entre le grand axe et le petit axe de l'ellipse.

7. Structure de palier selon la revendication 1,
**caractérisée par** la réalisation d'une transition continue du matériau amortisseur (4) avec un tracé de préférence en forme d'arc de cercle ou en forme de bourrelet.

8. Structure de palier selon l'une des revendications précédentes,
**caractérisée en ce que**, lorsque le pot présente une surface transversale rectangulaire a·b, des valeurs d'amortissement et de raideur différentes peuvent être attribuées dans la direction des côtés respectifs a et b.

9. Structure de palier selon l'une des revendications précédentes,
**caractérisée en ce que** le matériau amortisseur (4) est réalisé à partir de polymères à longue chaîne naturels ou synthétiques, et **en ce que** le pot, la ou les douilles d'armature (5) et la douille de guidage (7) ainsi que le goujon de guidage (8) sont réalisés en métal, en particulier en acier.

10. Structure de palier selon la revendication 9,
**caractérisée en ce que** les surfaces métalliques recevant la vulcanisation présentent une structure rugueuse.

11. Structure de palier selon l'une des revendications précédentes,
**caractérisée en ce que** le goujon (8) est monté avec possibilité de rotation dans la douille de guidage (7).
